# EUROPÄISCHE PATENTSCHRIFT

(11) **EP 0 380 775 B1**
(45) Veröffentlichungstag und Bekanntmachung des Hinweises auf die Patenterteilung: **27.03.1996**
(21) Anmeldenummer: 89122029.5
(22) Anmeldetag: 29.11.1989
(51) Int. Cl.: G02B 6/26, G02B 6/36, G02B 6/32

(54) **Adapter für einen Lichtleiter**
Adapter for an optical fibre
Adaptateur pour fibre optique

(30) Priorität: 31.01.1989 DE 3902807
(43) Veröffentlichungstag der Anmeldung: 08.08.1990
(73) Patentinhaber: Daimler-Benz Aerospace Aktiengesellschaft, D-81663 München (DE)
(72) Erfinder: Hengst, Thomas, D-8013 Haar (DE); Hahn, Andreas, D-8029 Sauerlach (DE)

(56) Entgegenhaltungen:
- EP-A- 0 166 860
- JP-A- 5 729 023
- US-A- 3 622 743
- PATENT ABSTRACTS OF JAPAN, Band 6, Nr. 168 (P-139)[1046], 2. September 1982; & JP-A-57 85 014

## Beschreibung

Die Erfindung betrifft einen Adapter für den direkten Anschluß eines Lichtleiterendstückes an eine Koppeleinrichtung eines medizinischen Lasergerätes.

Aus dem deutschen Gebrauchsmuster 84 16 748.3 ist eine Lichtleitereinkopplung für ein medizinisches Lasergerät bekannt, bei dem am Ende einer Lichtleitfaser ein zylindrisches Kopplungsstück mit einer Einkoppeloptik sowie mit verschiedenen elektrischen Kontakten angeordnet ist. Das gesamte Kopplungsteil wird in eine entsprechende Koppeleinrichtung des Lasergerätes gesteckt, wobei die elektrischen Kontakte erst im vollständig eingesteckten Zustand die Inbetriebnahme des Lasergerätes ermöglichen.

Zur Verwendung als Einweginstrument ist obige Anordnung zu aufwendig,es wurde daher auch schon vorgeschlagen, das Kopplungsteil so zu vereinfachen, daß dieses zusammen mit dem Lichtleiter als Einweginstrument verwendet werden kann (DE 3 444 824 C2). Zur Verwendung solcher "Einweglichtleiter" ist ein Adapter notwendig, der eine Einkoppeloptik beinhaltet und die Sicherheitseinrichtungen im Lasergerät betätigt, damit dessen Inbetriebnahme freigegeben wird. Es besteht jedoch dann die Gefahr, daß der Laser auch betrieben werden kann, wenn zwar der Adapter in dem Laser, nicht jedoch das Lichtleiterendstück in dem Adapter steckt.

Es ist daher Aufgabe der Erfindung einen Adapter für den Anschluß eines Lichtleiterendstückes an eine Koppeleinrichtung eines medizinischen Lasergerätes zu schaffen, der gegen Fehlbedienung im o.g. Sinne geschützt ist. Diese Aufgabe wird durch einen nach den kennzeichnenden Merkmalen des Patentanspruchs 1 ausgebildeten Adapter gelöst.

Der erfindungsgemäße Adapter, der im wesentlichen aus zwei axial verschiebbaren Teilstücken besteht, betätigt die Sicherheitseinrichtungen des Lasergerätes nur, wenn ein Lichtleiterendstück vollständig in den Adapter eingeschoben ist. Der Adapter kann daher sogar ständig im Laser gerät verbleiben, ohne daß dieses bei herausgezogenem Lichtleiterendstück betrieben werden kann.

Im allgemeinen ist die Koppeleinrichtung im Lasergerät justierbar, um deren optische Achse mit der Strahlrichtung des Lasers koaxial ausrichten zu können. Es ist dann besonders vorteilhaft, wenn die Einkoppeloptik des Adapters bei eingeschobenem Lichtleiterendstück in den Drehpunkt der Justierung für die Koppeleinrichtung gebracht wird. Dadurch wird bei Justierung der Koppeleinrichtung ein Parallelversatz der Einkoppeloptik vermieden.

Die Erfindung wird im folgenden anhand des in den Figuren teilweise schematisch dargestellten Ausführungsbeispiels näher beschrieben, wobei diese Figuren zum einen einen Adapter innerhalb der Koppeleinrichtung eines Lasergerätes ohne (Fig. 1) und mit (Fig. 2) eingestecktem Lichtleiterendstück zeigen und zum anderen einen weiteren Adapter, bei dem die Einkoppeloptik im ersten Teilstück angeordnet ist (Fig. 3).

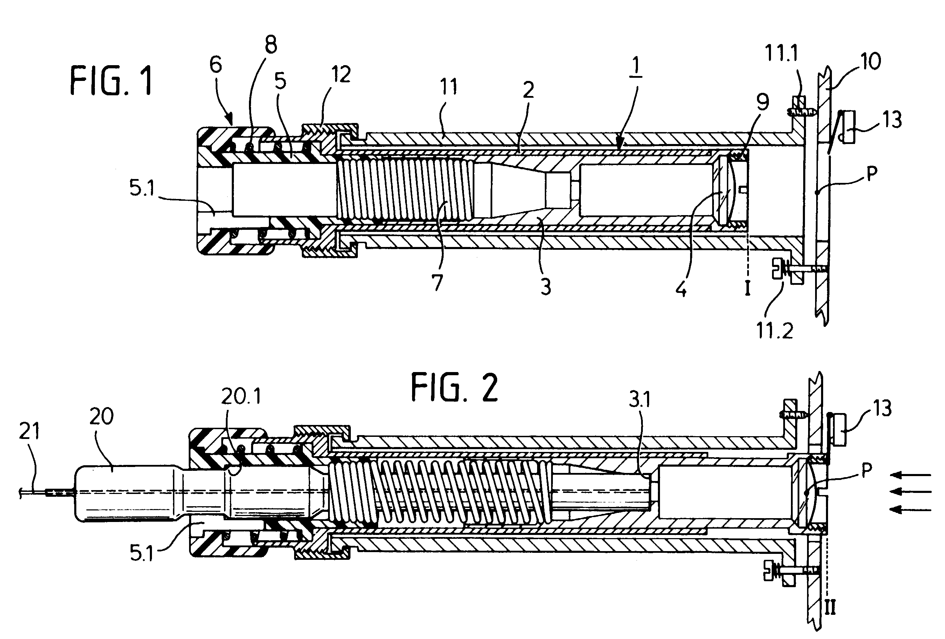

Der in den Figuren 1a und 1b dargestellte Adapter 1 besteht im wesentlichen aus einer ersten äußeren Hülse 2 und einer innerhalb dieser Hülse 2 axial verschiebbaren zweiten Hülse 3. Die innere Hülse 3 trägt auf der dem Lasergerät 10 zugewandten Seite eine Einkoppeloptik 4 und ist am anderen Ende über eine schraubenförmige Zugfeder 7 mit einem Halteteil 5 verbunden, welches sich gegen die äußere Hülse 2 abstützt und Bestandteil einer Verriegelung 6 für das Lichtleiterendstück 20 ist.

Der Adapter 1 wird in eine Koppeleinrichtung 11 eingeschoben und dort mittels einer Überwurfmutter 12 fixiert. Ohne eingeschobenes Lichtleiterendstück nimmt dabei der Adapter innerhalb der Koppeleinrichtung 11 die Position 1 in der Figur 1 ein. Wird nun das Lichtleiterendstück 20 in den Adapter eingeführt, so stößt dessen Stirnfläche zuerst auf eine entsprechende Verengung 3.1 der inneren Hülse 3. Bei weiterem Einschieben des Lichtleiterendstückes 20 wird nunmehr die innere Hülse 3 aus der äußeren Hülse 2 gegen die Kraft der Zugfeder 7 herausgeschoben bis in die in Fig. 2 dargestellte Position II. Hierzu wird vorher der Überwurfring 9 der Verriegelung 6 gegen die Kraft einer Druckfeder 8 an die äußere Hülse 2 axial herangeschoben, so daß die mit Schlitzen 5.1 versehenen Krallen 5.2 des Teiles 5 durch eine entsprechende Verdickung des Lichtleiterendstückes 20 radial nach außen gedrückt werden und hinter einer ringförmigen Stufe 20.1 einschnappen können. Nach dem Freilassen des Überwurfringes 9 springt dieser in seine gezeigte Position zurück, was durch das Lichtleiterendstück in dem Adapter arretiert und damit die Position II festgehalten ist.

Kurz bevor die innere Hülse 3 die Position II erreicht, wird der Fühlerarm eines Mikroschalters 13 durch den Rand der Linsenhalterung 9 berührt und beim weiteren Einschieben betätigt. Der Mikroschalter 13 detektiert somit die Endlage der Position II und erkennt damit, daß sich ein Lichtleiterendstück in dem Adapter befindet. Im eingekoppelten Zustand des Lichtleiterendstückes 20, also bei Erreichen der Position II kann das Lasergerät in Betrieb genommen werden, wobei die durch Pfeile symbolisierte parallele Laserstrahlung mittels der Einkoppeloptik 4 auf die Stirnfläche der sich zentrisch im Lichtleiterendstück befindlichen Lichtleitfaser 21 fokussiert wird.

Die Koppeleinrichtung 11 ist über je drei über dem Umfang verteilten Justierschrauben 11.1 und Andruckelemente 11.2 kipp- und schwenkbar, wobei der Drehpunkt P dieser Kipp- und Schwenkbewegung auf der Höhe der Einkoppeloptik bei Erreichen der Position II liegt. Bei Einstellung der Justierung 11.1 wird die Koppeleinrichtung 11 samt Adapter 1 um den Punkt P gedreht und auf maximale Intensität des in die Lichtleitfaser 21 eingekoppelten Laserlichtes eingestellt. Eine Verschiebung der Koppeleinrichtung in eine zur Strahlachse senkrechte Richtung ist dann nicht mehr erforderlich.

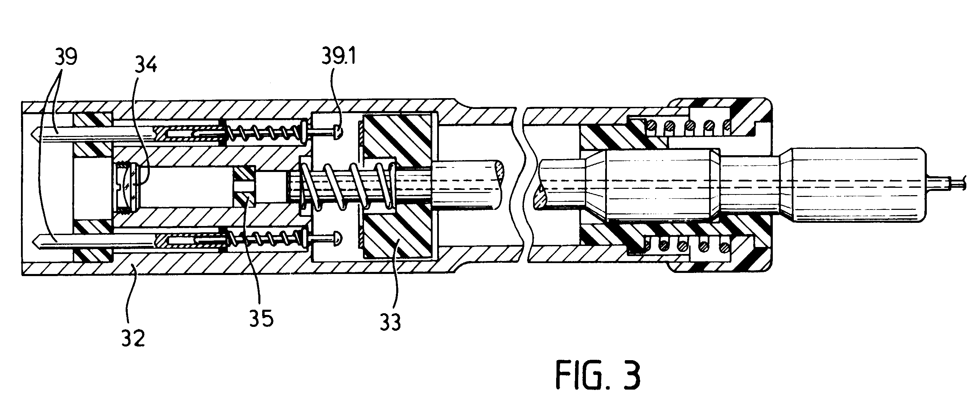

Bei dem in Fig. 3 dargestellten Ausführungsbeispiel eines Adapters befindet sich die Einkoppeloptik 34 innerhalb eines ersten Teilstückes 32, welches in eine nicht dargestellte Koppeleinrichtung eines Lasergerätes anstelle eines speziell dafür vorgesehenen Lichtleiterendstückes eingeschoben wird. Aus diesem Grunde weist bereits das erste Teilstück 32 elektrische Kontakte 39 auf, welche mit entsprechenden Gegenstücken in der Koppeleinrichtung in Kontakt treten und im Prinzip eine elektrische Verlängerung dieser Gegenkontakte darstellen. Die Enden dieser Kontakte weisen federnde Spitzen 39.1 auf, welche einem axialverschiebbaren zweiten Teilstück 33 gegenüber stehen. Beim Einschieben eines Lichtleiterendstückes gemäß Fig. 1 oder 2 wird das zweite Teilstück 33 in Richtung auf die Kontaktspitzen 39.1 von einer ersten in eine zweite Position geschoben, wobei es bei Erreichen der zweiten Position die Kontakte 39 überbrückt und damit eine Sicherheitseinrichtung auslöst. In der zweiten Position berührt die Stirnfläche des Lichtleiterendstückes einen Anschlag 35 , der so postiert ist, daß sich der Lichtleiter im Brennpunkt der Optik 34 befindet. Die Fixierung des Lichtleiterendstückes geschieht dann in gleicher Weise wie in Fig. 2.

## Patentansprüche

1. Adapter zum Anschluβ eines Lichtleiterendstücks an eine Koppeleinrichtung einer Lichtquelle hoher Intensität
mit folgenden Merkmalen:
* eine in der Koppeleinrichtung fixierbare erste Hülse (2) ;
* eine zweite Hülse (3), die eine Einkoppeloptik (4) trägt und die beim Einschieben des Lichtleiterendstücks durch das Lichtleiterendstück innerhalb der ersten Hülse von einer ersten Position in eine zweite Position verschoben wird, wobei in der ersten Position ein Anschlag der zweiten Hülse an der ersten Hülse anliegt, und wobei beim Einstecken das der Lichtquelle zugewandte Ende gegen die Kraft einer Feder in Richtung auf die Lichtquelle verschoben wird;
* eine Verriegelung an der ersten Hülse zur Arretierung des LL-Endstücks in der eingeschobenen Position, wodurch die zweite Hülse in der zweiten Position gehalten wird.

2. Adapter nach Anspruch 1, **dadurch gekennzeichnet**, daß die erste Hülse in der zweiten Hülse teleskopartig verschiebbar (2, 3) ist und mittels einer Feder (7) in der ersten Position (I) gehalten wird.

3. Adapter nach Anspruch 1 oder 2, **dadurch gekennzeichnet**, daß das zweite Teilstück (3) in definiertem Abstand zur Einkoppeloptik (4) einen Anschlag (3.1) für das Lichtleiterendstück (20) aufweist.

4. Adapter nach einem der Ansprüche 1 bis 3, **dadurch gekennzeichnet**, daß die Länge der zweiten Hülse in der ersten Position (I) derart bemessen ist, daß Sicherheitseinrichtungen (13) an der Koppelrichtung (11), welche ein vollständiges Einschieben des Lichtleiterendstückes (20) detektieren, noch nicht betätigt werden.

5. Adapter nach einem der Ansprüche 1 bis 4, **dadurch gekennzeichnet**, daß die Länge der in die Koppeleinrichtung (11) hineinragenden zweiten Hülse in der zweiten Position (II) derart bemessen ist, daß sich die Einkoppeloptik (4) in der zweiten Position (II) im Drehpunkt (P) einer die Koppeleinrichtung (11) schwenkenden und/oder kippenden Justierung (11.1; 11.2) befindet.

6. Adapter zum Anschluß eines Lichtleiterendstücks an eine Koppeleinrichtung einer Lichtquelle hoher Intensität
mit folgenden Merkmalen:
* eine in der Koppeleinrichtung fixierbare Hülse mit elektrischen Kontakten (39.1), welche mit entsprechenden Gegenstücken in der Koppeleinrichtung in Kontakt treten;
* ein Teilstück (33), das innerhalb der Hülse axial von einer ersten Position in eine zweite Position verschiebbar ist, und das beim Einstecken des Lichtleiter-Endstücks gegen die Kraft einer Feder in die zweite Position geschoben wird, wobei es beim Erreichen der zweiten Position die Kontakte überbrückt und damit eine Sicherheitseinrichtung auslöst;
* eine Verriegelung an der Hülse zur Arretierung des Lichtleiter-Endstücks in der eingeschobenen Position, wodurch das Teilstück in der zweiten Position gehalten wird.

## Claims

1. An adapter for connecting a fibre-optic light guide end piece to a coupling device of a light source of high intensity, having the following features:
* a first sleeve (2) which can be fixed in the coupling device;
* a second sleeve (3) which carries a coupling lens (4) and which on the insertion of the fibre-optic light guide end piece is displaced by the fibre-optic light guide end piece inside the first sleeve from a first position into a second position, wherein in the first position a stop on the second sleeve is seated against the first sleeve, and wherein on insertion the end facing the light source is displaced towards the light source against the force of a spring;
* a locking device on the first sleeve for locking the fibre-optic light guide end piece in the inserted position, by means of which the second sleeve is held in the second position.

2. An adapter according to claim 1, characterised in that the first sleeve is displaceable telescopically in the second sleeve (2, 3) and is held in the first position (I) by means of a spring (7).

3. An adapter according to claim 1 or 2, characterised in that the second section (3) has a stop (3.1) for the fibre-optic light guide end piece (20) at a defined distance from the coupling lens (4).

4. An adapter according to any one of claims 1 to 3, characterised in that the length of the second sleeve in the first position (I) is designed in such a way that safety devices (13) on the coupling device (11) which detect the complete insertion of the fibre-optic light guide end piece (20) are not yet actuated.

5. An adapter according to any one of claims 1 to 4, characterised in that the length of the second sleeve which projects into the coupling device (11) in the second position (II) is designed in such a way that in the second position (II) the coupling lens (4) is situated at the swivel point (P) of an adjusting device (11.1; 11.2) which swivels and/or tilts the coupling device (11).

6. An adapter for connecting a fibre-optic light guide end piece to a coupling device of a light source of high intensity, having the following features:
* a sleeve which can be fixed in the coupling device and which has electrical contacts (39.1) which come into contact with corresponding counterparts in the coupling device;
* a section (33) which is axially displaceable inside the sleeve from a first position into a second position, and which is pushed into the second position against the force of a spring on the insertion of the fibre-optic light guide end piece, wherein on reaching the second position it bridges the contacts and thus releases a safety device;
* a locking device on the sleeve for locking the fibre-optic light guide end piece in the inserted position, by means of which the section is held in the second position.

## Revendications

1. Adaptateur pour connecter une extrémité de fibre optique à un dispositif de couplage d'une source de lumière de forte intensité présentant les caractéristiques suivantes:
* un premier manchon (2) qui peut être fixé dans le dispositif de couplage,
* un deuxième manchon (3) qui porte une optique (4) de couplage d'entrée et qui lors de l'introduction de l'extrémité de fibre optique est déplacé par ladite extrémité de fibre optique d'une première position vers une deuxième position à l'intérieur du premier manchon, une butée du deuxième manchon venant en contact avec le premier manchon dans la première position et, lors de l'introduction, l'extrémité tournée vers la source lumineuse étant repoussée en direction de la source lumineuse à l'encontre de la force d'un ressort,
* un verrouillage sur le premier manchon afin de bloquer l'extrémité de fibre optique dans la position d'introduction, le deuxième manchon étant ainsi tenu dans la deuxième position.

2. Adaptateur selon la revendication 1, caractérisé par le fait que le premier manchon peut coulisser à la manière d'un élément télescopique dans le deuxième manchon et est tenu dans la première position (I) au moyen d'un ressort (7).

3. Adaptateur selon la revendication 1 ou 2, caractérisé par le fait que le deuxième manchon (3) présente à une distance déterminée de l'optique de couplage (4) une butée (3.1) pour l'extrémité de fibre optique (20).

4. Adaptateur selon l'une des revendications 1 à 3, caractérisé par le fait que la longueur du deuxième manchon dans la première position (I) est telle que des dispositifs de sécurité (13) sur le dispositif de couplage (11) qui détectent l'introduction complète de l'extrémité de fibre optique (20) ne sont pas encore actionnés.

5. Adaptateur selon l'une des revendications 1 à 4, caractérisé par le fait que la longueur du deuxième manchon qui fait saillie dans le dispositif de couplage (11), dans la deuxième position (II), est telle que, dans la deuxième position (II), l'optique de couplage (4) se trouve au centre de rotation (P) d'un dispositif de réglage (11.1, 11.2) qui fait pivoter et/ou basculer le dispositif de couplage (11).

6. Adaptateur pour connecter une extrémité de fibre optique à un dispositif de couplage d'une source de lumière de forte intensité présentant les caractéristiques suivantes:
* un manchon qui peut être fixé dans le dispositif de couplage, avec des contacts (39.1) électriques qui entrent en contact avec des éléments conjugués dans le dispositif de couplage;
* un élément (33) qui peut être déplacé axialement à l'intérieur du manchon, d'une première position vers une deuxième position et qui lors de l'introduction de l'extrémité de fibre optique est déplacé dans la deuxième position, à l'encontre de la force d'un ressort, ledit élément pontant les contacts et déclenchant ainsi un dispositif de sécurité lorsque la deuxième position est atteinte;
* un verrouillage sur le manchon afin de bloquer l'extrémité de fibre optique dans la position d'introduction, l'élément étant ainsi tenu dans la deuxième position.
